(19) **Europäisches Patentamt**
**European Patent Office**
**Office européen des brevets**

(11) **EP 3 334 173 B1**

(12) **EUROPEAN PATENT SPECIFICATION**

(45) Date of publication and mention
of the grant of the patent:
**08.10.2025 Bulletin 2025/41**

(21) Application number: **16840758.3**

(22) Date of filing: **24.08.2016**

(51) International Patent Classification (IPC):
*H04N 21/472* (2011.01)       *G06F 3/0484* (2022.01)
*H04N 21/8545* (2011.01)      *H04N 13/117* (2018.01)
*G06F 3/0488* (2022.01)       *G06F 3/16* (2006.01)
*G06F 3/01* (2006.01)         *G10L 15/22* (2006.01)
*H04N 21/6587* (2011.01)      *H04N 13/279* (2018.01)

(52) Cooperative Patent Classification (CPC):
**H04N 21/47217; G06F 3/012; G06F 3/013;
G06F 3/04815; G06F 3/04845; G06F 3/0488;
H04N 13/117; H04N 13/279; H04N 21/47202;
H04N 21/4728; H04N 21/6587**

(86) International application number:
**PCT/CN2016/096568**

(87) International publication number:
**WO 2017/036329 (09.03.2017 Gazette 2017/10)**

(54) **METHOD AND DEVICE FOR PLAYING VIDEO CONTENT AT ANY POSITION AND TIME**

VERFAHREN UND VORRICHTUNG ZUR WIEDERGABE VON VIDEOINHALTEN AN EINER
BELIEBIGEN STELLE UND EINEM BELIEBIGEN ZEITPUNKT

PROCÉDÉ ET DISPOSITIF DE LECTURE DE CONTENU VIDÉO À UNE POSITION ET UN INSTANT
QUELCONQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.08.2015 CN 201510543434**

(43) Date of publication of application:
**13.06.2018 Bulletin 2018/24**

(73) Proprietor: **Huawei Technologies Co., Ltd.
Longgang District
Shenzhen, Guangdong 518129 (CN)**

(72) Inventors:
• **LIAN, Shiguo
Shenzhen
Guangdong 518129 (CN)**
• **QU, Zhan
Shenzhen
Guangdong 518129 (CN)**
• **HUANG, Xueyan
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
CN-A- 103 455 253      CN-A- 104 007 826
CN-A- 104 010 225      CN-A- 104 602 129
CN-A- 105 357 585      JP-A- 2012 175 694
JP-A- 2014 199 990     US-A1- 2003 223 732
US-A1- 2010 017 747    US-A1- 2014 340 404

• ANONYMOUS: "WebRotate 360 Product Viewer -
User Guide v3.5", 1 September 2014
(2014-09-01), pages 1 - 34, XP055490310,
Retrieved from the Internet <URL:http://
addspace.ru/downloads/webrotate360.pdf>
[retrieved on 20180705]

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

## TECHNICAL FIELD

The present invention pertains to the field of man-machine interaction technologies, and in particular, to an interaction method and an apparatus for playing video content from any location and any time.

## BACKGROUND

As technologies develop and demands of people increase, more videos are propagated and watched. However, currently, playback of a video is merely simple reproduction and replay of a video source. Generally, the video is reproduced as it is captured. When a person wants to comprehensively observe an object or a scene, if the observer and the observed object are not in a same space, a solution is to take an all-angle video for the object, and the observer learns details of the object or the scene from any angle by watching the video. For example, a typical scenario is that: if an online shop owner wants to display a commodity, the owner only needs to use a common photographing device such as a mobile phone to take an all-angle video by revolving around the commodity, so that a buyer can learn the commodity as if an actual object is observed. A disadvantage of this manner is that the observer can only watch the taken video, a sequence and a manner of playing video content are fixed, and the photographed object or scene cannot be watched from any location and any time.

US Patent Application, 20140340404, discloses a method for generating 3D viewpoint video content. The method comprising the steps of receiving videos shot by cameras distributed to capture an object; forming a 3D graphic model of at least part of the scene of the object based on the videos; receiving information related to viewpoint and 3D region of interest (ROD in the object; and combining the 3D graphic model and the videos related to the 3D ROI to form a hybrid 3D video content.

Anonymous: "Webrotate 360 Product Viewer-User Guide v3.5" discloses a WebRotate 360 Product Viewer which can shoot views 360.

US Patent Application, 2010/017747 discloses a method for operating a product viewer for displaying a product on a screen such that it can be visually rotated, panned, and zoomed.

JP012175694A discloses an electronic device comprising a housing; a shooting unit that captures an image of a subject; an angle detection unit that detects the relative rotation angle of the subject with respect to the shooting unit; and a storage unit that associates and stores the image and the shooting angle. The stored images are combined with other images of the same subject and displayed as a three-dimensional image.

JP2014199990A discloses a multi-viewpoint image display apparatus that, based on encoded viewpoint information and user input, calculates frame position information corresponding to frames in video data constructed from multiple still images captured from different viewpoints. Based on the calculation result, the frame displayed on the display unit is switched without bothersome operations, enabling selection of a desired viewpoint frame like a still image.

## SUMMARY

Embodiments of the present invention provide an interaction method for playing video content from any location or any time, so that an observer can flexibly and arbitrarily observe an object or a scene in the video content from each location.

Aspects of the present application are defined in the independent claims. Further embodiments are defined by the dependent claims.

## BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a flowchart of implementing an interaction method for playing a video from any location and any time according to an embodiment of the present invention;
FIG. 2 is a schematic diagram of a sliding operation according to an embodiment of the present invention;
FIG. 3 is a schematic diagram of an all-angle video of an object rotating from left to right according to an embodiment of the present invention;
FIG. 4 is a schematic diagram of an all-angle video of an object rotating from right to left according to an embodiment of the present invention;
FIG. 5 is a schematic diagram of an all-angle video of an object rotating from top to bottom according to an embodiment of the present invention;
FIG. 6 is a schematic diagram of an all-angle video of an object rotating from bottom to top according to an embodiment of the present invention; and
FIG. 7 is a schematic structural diagram of an intelligent terminal for implementing video playback from any location and any time according to an embodiment of the present invention.

## DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

In an embodiment of the present invention, for example, a video source is obtained by performing 360-degree (or approximately 360-degree) video capturing on an object, an image, or an environment, so that a relatively comprehensive video record of the object or the image can be obtained. The video content in the video source is reproduced in a customized and personalized manner (a playback location, a playback sequence, a playback manner, or a playback visual angle) according to a manner of displaying video content that is determined according to a control signal input by a user. In this embodiment of the present invention, instead of simply reproducing the video, the playback manner, the playback location, and the like of the video content may be defined.

Video content captured from an original video source may be comprehensive information about a big environment. There are multiple targets or objects in the big environment. For each target or object, 360-degree (or approximately 360-degree) video capturing is performed. In a process of playing the video content, the targets or the objects may be fully displayed sequentially. Further, in the process of playing the video, if an instruction or a control gesture signal is received, a target or a time period of the video may be skipped to continue to display comprehensive information about a next target, and this target may be displayed in the video content in a customized or personalized manner. This process may be implemented by searching or matching the video content.

In this embodiment of the present invention, based on an instruction input by a user, a video can be played from any location and any time point of the video content, or during video playback, any clip in the video content may be skipped. For example, in an implementation, an input instruction of a user may be a fast-forward instruction. During video processing, a fast-forward time period is set to a time period for displaying information related to a target. Therefore, a fast-forward control signal may match jumping from a current target to a next target or a target specified by the user, and content, corresponding to the next target, of the video is played according to a playback manner controlled by the user. The user may also watch an image of a particular scene or object by means of voice input, and after matching, start playback from a corresponding location that is jumped to.

To further describe the technical solutions in the embodiments of the present invention, a description is provided below by using specific embodiments.

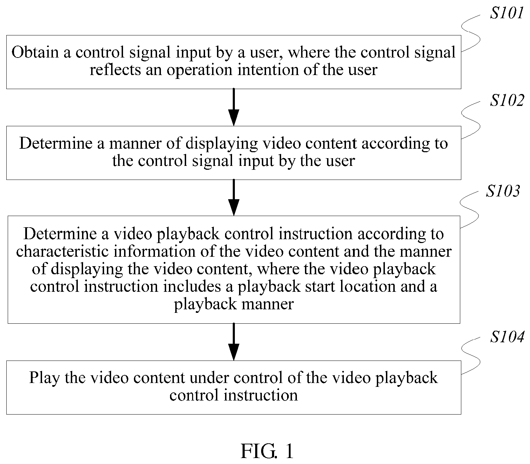

FIG. 1 shows a process of implementing a method for playing video content from any location and any time according to an embodiment of the present invention, and the method includes:

S101: Obtain a control signal input by a user, where the control signal reflects an operation intention of the user.

The control signal input by the user is triggered and generated by detecting an operation (for example, an operation on a touchscreen) performed by the user on an intelligent terminal such as sliding on a touchscreen; or the control signal input by the user may be triggered and generated by detecting a control action of the user such as a hand wave, a finger movement, finger twirling, palm opening and wrist rotating, gazing or line-of-sight diversion, a head movement, or a body movement; or the control signal input by the user may also be voice input, and the voice input is detected by using a microphone.

The control signal reflects the operation intention of the user, that is, the control signal reflects an operation that the user wants to perform on the video and is a control signal obtained after the operation intention of the user is signalized.

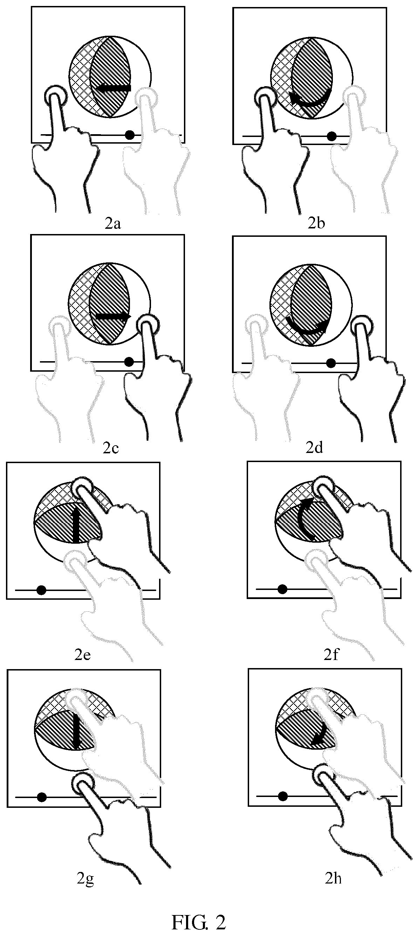

The control signal input by the user is obtained. For example, sliding on the touchscreen includes sliding leftward, rightward, upward, and downward (FIG. 2a, FIG. 2c, FIG. 2e, and FIG. 2g), and sliding approximately leftward, rightward, upward, and downward. For example, a leftward curve (FIG. 2b) may also be considered as sliding approximately leftward, a rightward curve (FIG. 2d) may also be considered as sliding approximately rightward, an upward curve (FIG. 2f) may also be considered as sliding approximately upward, and a downward curve (FIG. 2h) may also be considered as sliding approximately downward.

Similarly, a hand wave or a finger movement includes leftward, rightward, upward, and downward waves or movements, and approximately leftward, rightward, upward, and downward waves or movements. For example, a leftward curving wave or movement may also be considered as an approximately leftward wave or movement; and rightward, upward, and downward cases are similar.

The input of the user is obtained by using a sensor, where finger twirling includes leftward twirling, rightward twirling, upward twirling, and downward twirling.

The input of the user is obtained by using a sensor, where palm opening and wrist rotating include rotating from left to right, rotating from right to left, rotating from top to bottom, and rotating from bottom to top.

The input of the user is obtained by using a sensor, where gazing or line-of-sight diversion includes gazing at an upper part of a picture of the video or diverting a line of sight from front to an upper part. Similarly, gazing or line-of-sight diversion further includes gazing at a lower part, a left part, or a right part of a picture of the video, or diverting a line of sight from front to a lower part, to a left part, or to a right part.

The voice input of the user is obtained by using a microphone, where a voice instruction includes an instruction such as "move left" and "turn left" or an instruction of a similar meaning, and rightward, upward, and downward instructions are similar to the foregoing. A voice instruction for playing a particular image, for example, playing a video of an X object at a top angle, and playing a panorama of a Y object from left to right, may also be output to determine a location of the video.

The input of the user is obtained by using a sensor, where a head movement includes a head movement to left front, a head movement to right front, looking up, or looking down.

The input of the user is obtained by using a sensor, where a body movement includes a movement to left front or front, an upward body movement, or a downward body movement.

For the foregoing directions, the user is used as a reference. The foregoing left side is the left side relative to the user, and the foregoing right side is the right side relative to the user. Inevitably, some users are accustomed to using an object in a picture of a video as a reference to describe concepts "left" and "right", and in this case, "left" and "right" can be switched in a corresponding voice instruction.

In this embodiment, one manner or a combination of multiple manners of the following may be used to obtain the input of the user, including: obtaining a finger sliding movement of the user by using a touch sensor; obtaining a gesture movement of the user, or a direction of a head movement or a body movement of the user by analyzing images captured by a camera or by using technologies such as an infrared technology and an ultrasonic wave technology; obtaining a focus point change or a diversion direction change of a line of sight of the user by using a line-of-sight tracking sensor; and obtaining voice of the user by using a microphone. Further, in a case in which finger sliding of the user is obtained by using the touch sensor, the input of the user may also include pressure of an operation of the user obtained by using a pressure sensor.

In an implementation, for example, if a user wants to watch an object in a video image, the user may perform an operation on the object on the image by using a touchscreen or a gesture to control the video to play a video corresponding to the object, such as rotating the object and playing an image of the object from left to right.

In this embodiment, before the obtaining a control signal input by a user, the method further includes: displaying a preview picture of the video or playing the video.

S102: Determine a manner of displaying video content according to the control signal input by the user.

The manner of displaying the video content reflects an intention of the user (an observer or a person who plays the video). The manner of displaying the video content includes: a visual angle for playing content in a picture of the video, a rotation direction of target content, a reproduction manner, skipping target content to continue playback, or the like.

A target image requirement and a motion direction requirement of video content playback are determined according to the control signal input by the user, where a target image corresponds to a target frame, and the manner of displaying the video content is determined according to the target image requirement and the motion direction requirement of video content playback. The target frame is determined first, and after the target frame is determined, a location of the video may be determined, and then according to the control signal, it can be determined whether fast-forwarding or rewinding is to be performed, or whether the video is to be played from a visual angle of a left-to-right sequence, or the like. These are the target image requirement and the motion direction requirement of video content playback that are obtained according to the control signal.

Determining a visual angle requirement for watching the content in the picture of the video preferably includes: determining a change of a watching visual angle according to a motion direction and a motion increment that are input by the user, to determine the visual angle requirement for watching.

The motion increment specifically includes a displacement increment of a start point of a sliding track, and a displacement increment of a start point of a motion track of a hand wave or finger movement; a change of a finger movement angle during finger twirling; a change of a wrist rotating angle during palm opening and wrist rotating; a displacement increment of a line of sight from a gazing start point to a gazing end point during gazing or line-of-sight diversion; a preset visual angle change during output of each voice instruction; a displacement increment of a start point of a motion track of a head movement; and a displacement increment of a start point of a motion track of a body movement.

For example, a visual angle increment DeltV is determined by using a motion increment DeltX, and a visual angle parameter $V_i$ is obtained by means of accumulation. $V_i = V_{i-1} + \text{DeltV} = V_{i-1} + \text{alfa} * \text{DeltX}$, where alfa > 0, and a value interval of $V_i$ is [0, 1].

The determining a rotation direction requirement on an object in the picture of the video includes: obtaining a motion direction input by the user, where the rotation direction requirement on the object in the picture of the video is the same as the motion direction input by the user.

S103: Determine a video playback control instruction according to characteristic information of the video content and the manner of displaying the video content, where the video playback control instruction includes a playback start location and a playback manner.

The playback control instruction is used to implement the intention of the user, for example, a visual angle requirement for watching an object in the picture of the video and a rotation direction requirement on the object in the picture of the video of the user.

The video playback control instruction includes a playback start location and a playback manner. The playback start location corresponds to a target frame to be played, and a playback start location or a playback continuation location may be determined by determining the target frame. The playback manner may be a forward direction (forward), a reverse direction (backward), fast-forwarding, rewinding, and the like, or may be a manner of playing a video from a visual angle of rotating around an object or a target.

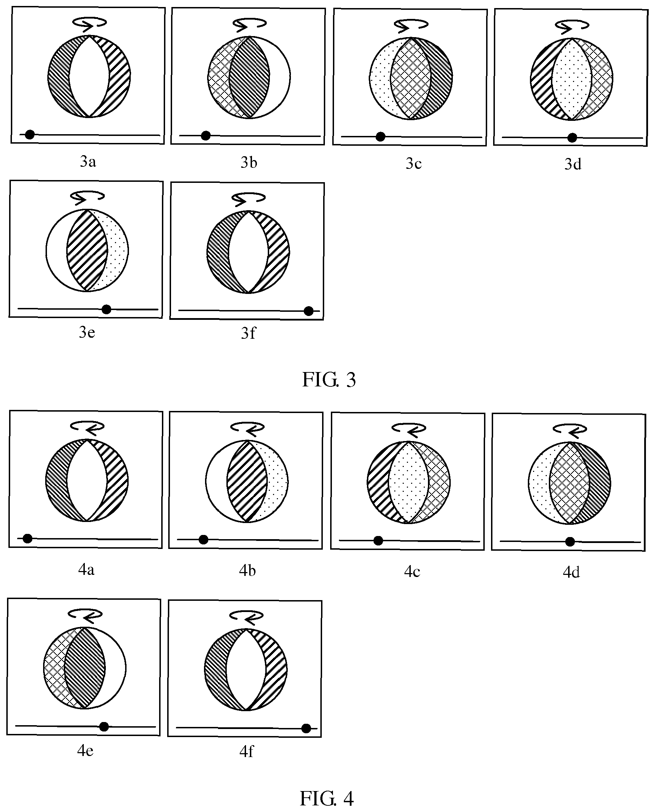

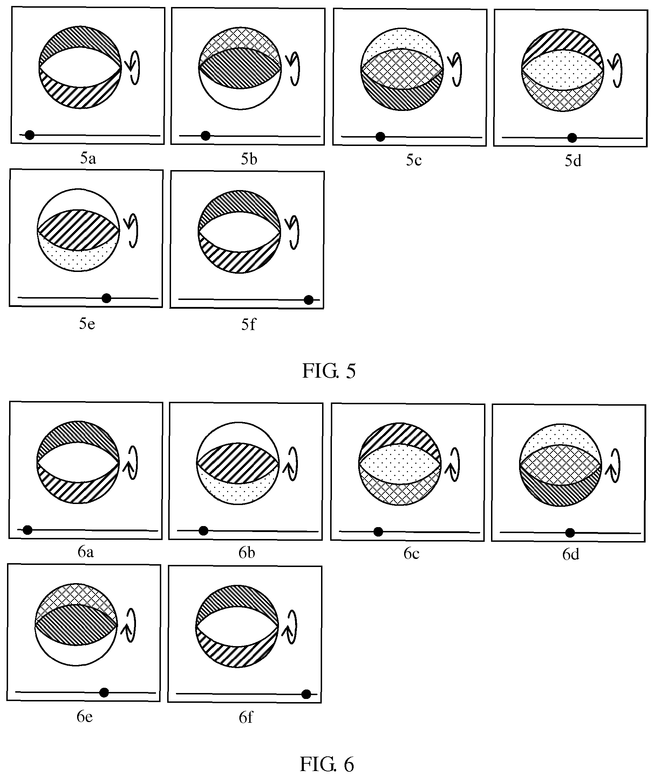

In an implementation, the characteristic information of the video may include location information of an object and motion information of target content in the picture of the video. The motion information is, for example, rotation information; and a rotation characteristic of the object in the picture of the video includes rotating from left to right (FIG. 3a to FIG. 3f), from right to left (FIG. 4a to FIG. 4f), from top to bottom (FIG. 5a to FIG. 5f), and from bottom to top (FIG. 6a to FIG. 6f) as the video is played.

In an embodiment of the present invention, a method is provided to determine a rotation characteristic of an object in a picture of a video. In this method, it is required that extra rotation direction information is recorded during a video taking process. A photographing device needs to be equipped with a sensor in a motion status such as a three-axis gyroscope, during the photographing process, a direction in which the photographing device photographs a photographed object is recorded in a video file, and direction data is read when the video file is parsed, so that a rotation characteristic of the photographed object is determined.

In another embodiment of the present invention, another method is provided to analyze a rotation characteristic of an object in any video. In this method, no extra record is required during a photographing process. Specifically, the object in the video may be analyzed. An identified point on the object is defined, a motion track of the identified point during normal playback of the video is analyzed, and the rotation characteristic of the object is determined according to a direction of the motion track.

In a specific implementation, a video source is obtained by performing 360-degree (or approximately 360-degree) video capturing on an object or an image, so that a comprehensive video record of the object or the image can be obtained. The video content in the video source is reproduced in a customized manner according to the manner of displaying the video content determined according to the control signal input by the user.

The determining a video playback control instruction includes: determining an appropriate video playback location and an appropriate video playback manner.

The video playback control instruction may specifically implement forward playback or reverse playback of the video; a playback start location or a playback start time; a playback visual angle and a playback location or time after fast-forwarding or jumping; loop playback of the video; playing the video at an accelerated speed, at a decelerated speed, or at a normal speed; and pausing or stopping playback of the video.

A video generated in a process of photographing an object is essentially a picture sequence formed by pictures of all angles (360 degrees or approximately 360 degrees) of the object, and three pieces of data are recorded in a video file, including: P', that is, a compressed picture sequence, Q, that is, a scanning direction (0 indicates from left to right; 1 indicates from right to left; 2 indicates from top to bottom; and 3 indicates from bottom to top), and N+1, that is, a quantity of pictures. The picture sequence is represented by Pi, where i ranges from 0 to N and N is an integer. That is, serial numbers of pictures are $P_0$, $P_1$, $P_2$, ..., and $P_N$. The scanning direction is determined and obtained by a three-axis gyroscope on a photographing device. A total quantity of the pictures is N+1.

A playback terminal parses the video file to obtain the three pieces of data: P', that is, a compressed picture sequence, Q, that is, a scanning direction, and N+1, that is, a quantity of pictures.

According to the watching visual angle $V_i$ determined in step S102, a target frame $O_{\_i}$ is calculated by using the following formula:

$$Q=0 \text{ or } Q=2, O_{\_i} = V_{\_i}*(N+1);$$

and

$$Q=1 \text{ or } Q=3, O_{\_i} = (1-V_{\_i})*(N+1).$$

Sometimes the video is viewed after the photographing is completed, and in this case, a photographing terminal is also a playback terminal. After the video is transmitted, the playback terminal is different from the photographing terminal. In an implementation, a process of parsing the video file to obtain various types of information of the video frame may be completed on a playback terminal that receives the video; or may be completed on a photographing terminal or an intermediate service device. The various types of information of the video frame and video content are sent together to a receiving terminal acting as the playback terminal.

A method for determining the appropriate video playback manner is comparing the rotation direction requirement on the object in the picture of the video and the rotation characteristic of the object in the picture of the video; and when the two are the same, playing the video in a forward direction; or when the two are opposite, playing the video in a reverse direction.

For example, an input of a user is sliding from left to right, and it indicates that a rotation direction requirement of the user is from left to right, and an object in a picture of a video is also rotated from left to right. In this case, the rotation direction requirement of the user is the same as a rotation characteristic of the object. Therefore, the video is played to a target frame in a forward direction. If the object in the picture of the video is rotated from right to left, the rotation direction requirement of the user and the rotation characteristic of the object are opposite, the video is played to the target frame in a reverse direction.

FIG. 4 is used as an example for description. If a current video playback frame is 4a and a target frame is 4c, and a rotation characteristic of an object in a picture of a video is from left to right, and it is assumed that the video is played on a touchscreen device, when a user slides rightward on the video, that is, a motion direction input by the user is the same as the rotation characteristic of the object in the picture of the video, the video is played in a sequence 4a-4b-4c, that is, the video is played to the target frame 4c in a forward direction. When the user slides leftward on the video, that is, the motion direction input by the user is opposite to the rotation characteristic of the object in the picture of the video, the video is played in a sequence 4a/4f-4e-4d-4c, that is, the video is played to the target frame 4c in a reverse direction.

The video playback control instruction may further include loop playback of the video. Specifically, when the video is played to the end or beginning, the video may continue to be played from the beginning or end, so that the user can experience that the object is rotated continuously.

The video playback control instruction includes playing the video at an accelerated speed, at a decelerated speed, or at a normal speed. Specifically, when the input of the user is sliding on the touchscreen, a hand wave or a finger movement, finger twirling, palm opening, and wrist rotating, the video is played at an accelerated speed, at a decelerated speed, or at a normal speed according to a speed of the input of the user. When the input of the user is sliding on the touchscreen, the video is played at an accelerated speed, at a decelerated speed, or at a normal speed according to a pressure value of the input of the user.

The video playback control instruction includes pausing or stopping playback of the video. Specifically, when the user pauses or stops the input, the video is also paused or stopped, so that instead of watching a video, the user experiences really operating an object. That is, the video may not be played completely but is played according to an action of the user. Using FIG. 5 as an example, an object in FIG. 5 is rotated from right to left, a current playback frame is 5a and a target frame is 5d, an input of a user is sliding from right to left. Therefore, a video is played in a forward direction. It is assumed that when the video is played to 5d, the user pauses the input, that is, the video is played according to a sequence 5a-5b-5c-5d and is paused at 5d, and then the input of the user is sliding from left to right, the video is played from 5d in a reverse direction. It is assumed that the user pauses the input when the video is played to 5b, that is, the video is played according to a sequence 5d-5c-5b and is paused at 4d.

S104: Play the video content under control of the video playback control instruction.

Further, in another embodiment of the present invention, because interaction processes implemented in the present invention are in a file of a video type, and storage space occupied by the video file is relatively large, a requirement on storage space of user equipment is relatively high or a running speed of the user equipment is affected. To improve practical applicability of the present invention, three-dimensional modeling may be performed for the object in the picture of the video in the present invention, and after the video source is received, the video source is parsed and a three-dimensional image is reconstructed. The video content in the video source is parsed to generate a three-dimensional image, where the three-dimensional image is used to display an object recorded in the video content. A display displays the three-dimensional image, and the user equipment receives the control signal input by the user by using the foregoing method, where the control signal reflects an operation intention of the user. A manner of displaying the three-dimensional image is determined according to the control signal input by the user, and the three-dimensional image is displayed.

In this embodiment, a device that needs to take an all-angle video is equipped with a depth sensor, and three-dimensional scene information registration software and texture fusion and mapping software are installed on the device. In a photographing process, the depth sensor is enabled, so that a camera of the device that photographs the all-angle video and the depth sensor work synchronously, and a photographer holding the photographing device perform continuous photographing on a scene for which modeling is required. In a specific implementation process, a time interval may be given, and the depth sensor performs photographing to obtain one frame of 3D point cloud data in front of the depth sensor at each time interval, where point cloud data obtained by means of photographing at a time t is represented by Ft. The camera takes a picture of a scene, that is, texture data, at the same time, where the texture data is represented by It. After the photographing is completed, a point cloud sequence and an image sequence are stored in the photographing device, the point cloud sequence is registered to a dense point cloud by using the three-dimensional scene information registration software, and this point cloud reflects three-dimensional space information of the target scene.

Local registration between adjacent frames is performed first on the point cloud sequence, for each point u_i in a point cloud $F_j$, $F_{(j+1)}$ is searched for a point v_i closest to the u_i, and a correspondence (u_i, v_i) is established. According to relationships between all corresponding points in point clouds of two frames, the following target function is established:

$$E = \sum_{i=1}^{n} \left| Ru_i + t - v_i \right|^2 \quad ,$$

where n is a quantity of all corresponding point pairs in the point clouds $F_j$ and $F\_(j+1)$. When E is minimized, an error of a squared Euclidean distance between corresponding points is minimized, and when optimization is completed, attitude change parameters R and t between the point clouds of two frames may be obtained, thereby implementing registration between adjacent frames.

Attitude change parameters of point clouds of adjacent frames are calculated by using a local registration algorithm, a whole point cloud sequence may be integrated into a dense point cloud of a target scene according to these parameters, and $T\_k (\cdot)$ is used to indicate that an attitude change operation is performed on a given point cloud according to an attitude change parameter (p_k) between F_k and F_(k+1),

that is, $T\_k(\cdot) = R\_k (\cdot) + t\_k$, and the following attitude change operation is redefined:

$$T_k{}'\left(\cdot\right) = T_{k+1}{}'\left(T_k\left(\cdot\right)\right), \mathrm{K\ K}\ , T_{N-1}{}'\left(\cdot\right) = T_{N-1}\left(\cdot\right) \quad ,$$

where k={ 1, 2, ..., and N-2}, and an accumulated point cloud is represented by F':

$$\mathrm{F}' = \mathrm{T}_1{}'\left(\mathrm{F}_1\right) + \mathrm{T}_2{}'\left(\mathrm{F}_2\right) + \mathrm{L}\ + \mathrm{T}_{N-1}{}'\left(\mathrm{F}_{N-1}\right) + \mathrm{F}_{N} \quad .$$

Because relative attitudes of the camera on the photographing device and the depth sensor are determinate, and image data and point cloud data are simultaneously obtained by means of photographing, when a space attitude parameter of the depth sensor shooting each point cloud frame is obtained, a space attitude parameter of the camera taking each picture is also obtained. Therefore, a correspondence between texture data (image) obtained by means of photographing by the camera and a scene dense point cloud may be constructed, and high-definition texture data is rendered into a three-dimensional model of the scene by using texture fusion and mapping software, so as to form a highly precise scene three-dimensional reconstruction model.

In this case, in step S102, a visual angle requirement of the user for watching may be directly determined according to the input of the user. In step S103, in a specific method for determining the target frame in the video, the target frame in the video is determined according to a space attitude parameter of each frame in the video that corresponds to the visual angle requirement for watching. Specifically, a corresponding space attitude parameter may be determined according to the visual angle for watching, a space attitude parameter closest to the corresponding space attitude parameter is obtained from a set of the space attitude parameters of the frames in the video by means of matching, and a frame corresponding to the matched space attitude parameter is the target frame.

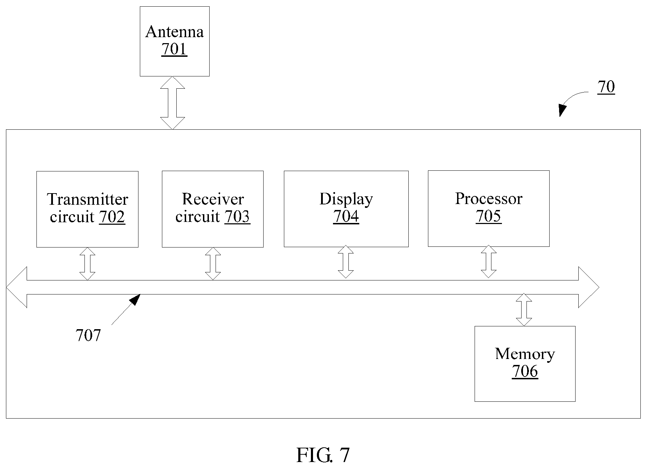

FIG. 7 shows an intelligent terminal 70 for implementing the foregoing methods according to an embodiment of the present invention. The intelligent terminal may be a terminal device having a media playback function such as a smartphone, a mobile personal computer, a media player, and a portable audio-video device. For ease of description, only a part related to this embodiment is shown. The intelligent terminal can perform somatosensory interaction. The intelligent terminal 70 is a device or an apparatus for implementing the foregoing method embodiments, and therefore, each component or physical function hardware of the intelligent terminal 70 can implement each step in the foregoing method embodiments and can perform each process in the foregoing method embodiments. Therefore, the intelligent terminal uses the foregoing method to play video content from any location and any time.

The intelligent terminal 70 includes an antenna 701, a transmitter circuit 702, a receiver circuit 703, a display 704, a processor 705, a memory 706, a bus 707, and the like. Components of the intelligent terminal 70 are coupled together by using the bus system 707. In addition to a data bus, the bus system 707 further includes a power supply bus, a control bus, and a state signal bus. However, for the purpose of clear description, various buses in the figure are marked as the bus system 707. However, in the terminal for implementing this embodiment of the present invention, for example, the transmitter circuit 702 may be optional or unnecessary. The intelligent terminal 70 is configured to receive a video source and a signal, but does not send the video source or the signal. In this embodiment of the present invention, the antenna is also optional or unnecessary. This embodiment of the present invention may be implemented in a wired manner. Although some functions may be affected in this solution, the wired manner is also an option. The memory 706 may be configured to store the obtained video source.

In an implementation manner, the provided intelligent terminal 70 includes:

the receiver circuit 703, configured to obtain a control signal input by a user, where the control signal reflects an operation intention of the user;

the processor 705, configured to determine a manner of displaying video content according to the control signal input by the user, and determine a video playback control instruction according to characteristic information of the video content and the manner of displaying the video content, where the video playback control instruction includes a playback start location and a playback manner; and

the display 704, configured to display and play the video content under control of the video playback control instruction.

Further, in a manner, the receiver circuit 703 is further configured to obtain a video source, where the video source includes the video content. In the solution of this manner, the display 704 is further configured to: before the receiver circuit obtains the control signal input by the user, display a preview picture of the video, or play the video content. In another implementation manner, the receiver circuit 703 may receive a voice instruction of the user, and parse the voice instruction to obtain the control signal; detect an action of the user, and parse the control action to obtain the control signal; detect a focus point change or a focus direction change of a line of sight of the user to obtain the control signal; or obtain the control information by detecting an operation performed by the user on an input apparatus connected to the receiver circuit.

In a manner that can be combined with the foregoing manner, the receiver circuit 703 is further configured to adjust the control signal according to an action speed of the action or an action speed of the operation performed by the user on the input apparatus connected to the receiver circuit. Further, the processor 705 is configured to determine the manner of displaying the video content according to the control signal input by the user; and determine the video playback control instruction according to the characteristic information of the video content and the manner of displaying the video content, where the video playback control instruction includes the playback start location and the playback manner. The manner of displaying the video content includes: forward playback, reverse playback, loop playback, or playback stopping; or playing the video at an accelerated speed, at a decelerated speed, or at a normal speed, playing the video after a particular location or time is jumped to, or playing the video from a particular location or time.

The processor 705 can determine a target image requirement and a motion direction requirement of video content playback according to the control signal input by the user, where a target image corresponds to a target frame; determine the manner of displaying the video content according to the target image requirement and the motion direction requirement of video content playback; and determine the video playback control instruction according to the characteristic information of the video content and the manner of displaying the video content, where the video playback control instruction includes the playback start location and the playback manner.

The processor may further parse the video source to obtain a video frame from the video source, a frame number of each video frame, and the characteristic information of the video content; determine a frame number of a to-be-played target frame according to the characteristic information of the video content and the manner of displaying the video content, where the frame number of the target frame corresponds to a video playback start location or a video playback continuation location; and determine a playback sequence for playing the target frame according to the frame number of the target frame and the manner of displaying the video content, where the playback sequence corresponds to a manner of playing the target frame.

In another embodiment used for describing the solution, the receiver circuit 703 is configured to obtain the input of the user. Preferably, the receiver circuit 703 is specifically configured to: obtain a finger sliding movement of the user by using a touch sensor; obtain a gesture movement of the user, or a direction of a head movement or a body movement by analyzing images captured by a camera or by using technologies such as an infrared technology and an ultrasonic wave technology; obtain a focus point change or a focus direction change of a line of sight of the user by using a line-of-sight tracking sensor; and obtain voice of the user by using a microphone, where the input of the user specifically includes sliding on a touchscreen; a hand wave or a finger movement; finger twirling, palm opening and wrist rotating, gazing or line-of-sight diversion, outputting a voice instruction, a head movement, and a body movement. The input of the user may also include pressure of an operation of the user.

The input of the user is obtained, sliding on the touchscreen includes sliding leftward, rightward, upward, and downward (FIG. 2a, FIG. 2c, FIG. 2e, and FIG. 2g), and sliding approximately leftward, rightward, upward, and downward. For example, a leftward curve (FIG. 2b) may also be considered as sliding approximately leftward, a rightward curve (FIG. 2d) may also be considered as sliding approximately rightward, an upward curve (FIG. 2f) may also be considered as sliding approximately upward, and a downward curve (FIG. 2h) may also be considered as sliding approximately downward.

Similarly, a hand wave or a finger movement includes leftward, rightward, upward, and downward waves or movements, and approximately leftward, rightward, upward, and downward waves or movements. For example, a leftward curving wave or movement may also be considered as an approximately leftward wave or movement; and a rightward, upward, or downward curving wave or movement may also be considered as an approximately rightward, upward, or downward wave or movement.

The input of the user is obtained, and finger twirling includes leftward twirling, rightward twirling, upward twirling, and downward twirling.

The input of the user is obtained, and palm opening and wrist rotating include rotating from left to right, from right to left, from top to bottom, and from bottom to top.

The input of the user is obtained, and gazing or line-of-sight diversion includes gazing at an upper part of a picture of the video or a line of sight is diverted from front to an upper part. Similarly, the gazing or line-of-sight diversion further includes gazing at a lower part, a left part, and a right part of the picture of the video, or the line of sight is diverted from front to a lower part, to a left part, or to a right part.

The input of the user is obtained, a voice instruction includes an instruction such as "move left" and "turn left" or an instruction of a same meaning, and rightward, upward, and downward instructions are similar to the foregoing.

The input of the user is obtained, and a head movement includes a head movement to left front, a head movement to right front, looking up, or looking down.

The input of the user is obtained, and a body movement includes a movement to left front or front, an upward body movement, or a downward body movement.

For the foregoing directions, the user is used as a reference. The foregoing left side is the left side relative to the user, and the foregoing right side is the right side relative to the user. Inevitably, some users are accustomed to using an object in a picture of a video as a reference to describe concepts "left" and "right", and in this case, in a corresponding voice instruction, "left" and "right" can be switched.

The processor 705 is configured to determine an intention of the user according to the input of the user, and determine the video playback control instruction according to the intention of the user and a characteristic of the video. The determining the intention of the user includes: determining a visual angle requirement for watching an object in the picture of the video and a rotation direction requirement on the object in the picture of the video. The determining the visual angle requirement for watching the object in the picture of the video optionally includes: determining a change of a watching visual angle according to a motion direction and a motion increment that are input by the user, and then determining the visual angle requirement for watching. The determining the rotation direction requirement on the object in the picture of the video includes: obtaining a motion direction input by the user, where the rotation direction requirement on the object in the picture of the video is the same as the motion direction input by the user. The determining a video playback control instruction includes: determining an appropriate playback location and an appropriate playback manner. The video playback control instruction specifically includes: forward playback or reverse playback of the video, loop playback of the video, playing the video at an accelerated speed, at a decelerated speed, or at a normal speed; and pausing or stopping playback of the video. A method for determining the appropriate video playback location is determining a target frame in the video according to the visual angle requirement for watching the object in the picture of the video. A method for determining the appropriate video playback manner is comparing a rotation direction requirement on the object in the picture of the video and a rotation characteristic of the object in the picture of the video; and when the two are the same, playing the video in a forward direction, or when the two are opposite, playing the video in a reverse direction.

The processor 705 is configured to execute the video playback control instruction and control the display 704 to display a corresponding video image. The processor 705 may further determine a location and the rotation characteristic of the object in the picture of the video. The rotation characteristic of the object in the picture of the video includes rotating from left to right (FIG. 3), from right to left (FIG. 4), from top to bottom (FIG. 5), and from bottom to top (FIG. 6).

Further, in another embodiment of a three-dimensional image in an implementation method, a structure of the intelligent device may be the structure shown in FIG. 7. As a new intelligent terminal 70', the intelligent terminal 70' includes: a receiver circuit 703', configured to obtain a video source and a control signal input by a user, where the video source includes video content, and the control signal reflects an operation intention of the user; a processor 705', configured to parse the video content in the video source to generate a three-dimensional image, where the three-dimensional image is used to display an object recorded in the video content, and determine a manner of displaying the three-dimensional image according to the control signal input by the user; and a display 704', configured to display the three-dimensional image under control of the processor.

In an implementation solution, the receiver circuit 703' is specifically configured to obtain the video source; and is further specifically configured to: receive a voice instruction of the user, and parse the voice instruction to obtain the control signal; detect an action of the user, and parse the control action to obtain the control signal; detect a focus point change or a focus direction change of a line of sight of the user to obtain the control signal; or obtain the control information by detecting an operation performed by the user on an input apparatus connected to the receiver circuit.

In each embodiment of the intelligent terminal, details about performing terminal or implementing video playback by the terminal are not described in the solution, because the details are already described in the method embodiments. All parts of the method may be inherited for implementing, by the intelligent terminal, the video playback in this embodiment of the present invention. The processor may cooperate with other components to fully implement the steps and functions of the method embodiments.

In this embodiment of the present invention, a video playback control instruction is determined according to characteristic information of video content and a manner of displaying the video content. The manner of displaying the video content is determined according to a control signal input by a user; therefore, the user can flexibly play the video content, and can watch an object in an all-angle video from any angle according to an intention of the user (an operator, an observer, or a person who plays the video). Therefore, an interaction process is more convenient, which is equivalent to directly controlling the object in the video for an operator, thereby providing more real experience and implementing selection of a manner of reproducing content in a video source in a personalized and customized manner.

## Claims

1. A method for playing an all-angle video about multiple objects, each of which is filmed from a 360 angle in the video, wherein the multiple objects comprise a first object and a second object, wherein the method comprises:

   obtaining (S101) a control signal input by a user, wherein the control signal reflects an operation intention of the user; wherein the control signal input by the user is triggered and generated by detecting an operation performed by the user on an intelligent terminal including sliding on a touchscreen; or the control signal input by the user is triggered and generated by detecting a control action of the user including a hand wave, a finger movement, finger twirling, palm opening and wrist rotating, gazing or line-of-sight diversion, a head movement, or a body movement; or the control signal input by the user is voice input; determining (S102) a manner of displaying video content according to the control signal input by the user, wherein the manner of displaying video content comprises a visual angle for playing a first video content about the first object, a rotation direction of the first object in the first video content, and skipping the first video content to continue displaying a second video content about the second object; determining (S103) a video playback control instruction according to characteristic information of the video content and the manner of displaying the video content, wherein the video playback control instruction comprises a playback start frame and a playback sequence of to-be-played frames, and wherein the characteristic information of the video content comprises a direction in which the first object is filmed in the first video content, a rotation characteristic of the first object in the first video content, and information that the first video content is about the first object and the second video content is about the second object; wherein the rotation characteristic of the object is determined by recording extra rotation direction information corresponding to a direction in which a photographing device equipped with a sensor in a motion status including a three-axis gyroscope photographs the object during a video taking process; and playing (S104) the video content under control of the video playback control instruction;

   wherein the step of determining a manner of displaying video content according to the control signal input by the user comprises: comparing a rotation direction requirement indicated by the input of the user on the object in the picture of the video and the rotation characteristic of the object in the picture of the video, and playing the video in a forward direction when the rotation direction requirement indicated by the input of the user and the rotation characteristic of the object are the same, or playing the video in a reverse direction when the rotation direction requirement indicated by the input of the user and the rotation characteristic of the object are the opposite.

2. The method according to claim 1, further comprising:

   obtaining a video source, wherein the video source comprises the video content; and before the obtaining a control signal input by a user, displaying a preview picture of the video or playing the video content.

3. The method according to claim 1, wherein the obtaining a control signal input by a user comprises:

   receiving a voice instruction of the user, and parsing the voice instruction to obtain the control signal; detecting an action of the user, and parsing the control action to obtain the control signal; detecting a focus point change or a focus direction change of a line of sight of the user to obtain the control signal; or obtaining the control signal by detecting an operation performed by the user on an input apparatus.

4. The method according to claim 3, wherein the control signal is adjusted according to an action speed of the action or an action speed of the operation performed by the user on the input apparatus; and the manner of displaying the video content further comprises: playing the video at an accelerated speed, at a decelerated speed, or at a normal speed, playing the video after a particular location or time is jumped to, or playing the video from a particular location or time.

5. The method according to claim 1, 2, or 3, wherein the manner of displaying the video content further comprises: forward playback, reverse playback, loop playback, or playback stopping; and the determining a manner of displaying video content according to the control signal input by the user comprises: performing forward playback, reverse playback, loop playback, or playback stopping of the video content according to the control signal input by the user.

6. The method according to claim 1, wherein the determining a manner of displaying video content according to the control signal input by the user comprises:

   determining a target image requirement and a motion direction requirement of video content playback according to the control signal input by the user; and
   determining the manner of displaying the video content according to the target image requirement and the motion direction requirement of video content playback.

7. The method according to any one of claims 1 to 6, wherein the method further comprises:

   parsing a video source of the first video content to obtain a scanning direction of video capturing, wherein the scanning direction is the rotation characteristic of the first object; or
   parsing the video source of the first video content to obtain a motion track of an identified point, and obtaining the rotation characteristic of the first object according to the motion track of the identified point.

8. The method according to claim 7, wherein the rotation characteristic of the first object comprises: rotation of the first object from left to right, from right to left, from top to bottom, or from bottom to top.

9. A terminal device for playing an all-angle video about multiple objects, each of which is filmed from a 360 angle in the video, wherein the multiple objects comprise a first object and a second object, wherein the terminal device comprises:

   a receiver circuit (703), configured to obtain a control signal input by a user, wherein the control signal reflects an operation intention of the user;
   wherein the receiver circuit is configured to obtain the control signal input by the user by detecting an operation performed by the user on an intelligent terminal including sliding on a touchscreen; or to obtain the control signal input by the user by detecting a control action of the user including a hand wave, a finger movement, finger twirling, palm opening and wrist rotating, gazing or line-of-sight diversion, a head movement, or a body movement; or to obtain voice input;
   a processor (705), configured to determine a manner of displaying video content according to the control signal input by the user, and determine a video playback control instruction according to characteristic information of the video content and the manner of displaying the video content, wherein the manner of displaying video content comprises a visual angle for playing a first video content about the first object, a rotation direction of the first object in the first video content, and skipping the first video content to continue displaying a second video content about the second object, wherein the video playback control instruction comprises a playback start frame and a playback sequence of to-be-played frames, and wherein the characteristic information of the video content comprises a direction in which the first object is filmed in the first video content, a rotation characteristic of the first object in the first video content, and information that the first video content is about the first object and the second video content is about the second object;
wherein the processor is further configured to determine the rotation characteristic of the object by recording extra rotation direction information corresponding to a direction in which a photographing device equipped with a sensor in a motion status including a three-axis gyroscope photographs the object during a video taking process; and
a display (704), configured to play the video content under control of the video playback control instruction;
wherein the processor (705) is further configured to compare a rotation direction requirement indicated by the input of the user on the object in the picture of the video and the rotation characteristic of the object in the picture of the video, and play the video in a forward direction when the rotation direction requirement indicated by the input of the user and the rotation characteristic of the object are the same, or play the video in a reverse direction when the rotation direction requirement indicated by the input of the user and the rotation characteristic of the object are the opposite.

10. The terminal device according to claim 9, wherein

   the receiver circuit is further configured to obtain a video source, wherein the video source comprises the video content; and
   the display is further configured to: before the receiver circuit obtains the control signal input by the user, display a preview picture of the video, or play the video content.

11. The terminal device according to claim 9, wherein the receiver circuit is specifically configured to:

receive a voice instruction of the user, and parse the voice instruction to obtain the control signal;

detect an action of the user, and parse the control action to obtain the control signal;

detect a focus point change or a focus direction change of a line of sight of the user to obtain the control signal; or

obtain the control signal by detecting an operation performed by the user on an input apparatus connected to the receiver circuit.

12. The terminal device according to claim 11, wherein the receiver circuit is further configured to adjust the control signal according to an action speed of the action or an action speed of the operation performed by the user on the input apparatus connected to the receiver circuit; and

the manner of displaying the video content further comprises: forward playback, reverse playback, loop playback, or playback stopping; or playing the video at an accelerated speed, at a decelerated speed, or at a normal speed, playing the video after a particular location or time is jumped to, or playing the video from a particular location or time.

13. The terminal device according to claim 9, wherein the processor is specifically configured to:

determine a target image requirement and a motion direction requirement of video content playback according to the control signal input by the user; and

determine the manner of displaying the video content according to the target image requirement and the motion direction requirement of video content playback.

**Patentansprüche**

1. Verfahren zum Abspielen eines Videos mit allen Winkeln über mehrere Objekte, von denen jedes in dem Video aus einem 360°-Winkel gefilmt wird, wobei die mehreren Objekte ein erstes Objekt und ein zweites Objekt umfassen, wobei das Verfahren Folgendes umfasst:

Erlangen (S101) eines Steuersignals, das durch einen Benutzer eingegeben wird, wobei das Steuersignal eine Vorgangsabsicht des Benutzers widerspiegelt; wobei das Steuersignal, das durch den Benutzer eingegeben wird, durch Detektieren eines Vorgangs, der durch den Benutzer auf einem intelligenten Terminal durchgeführt wird, einschließlich Schieben auf einem Touchscreen, ausgelöst und erzeugt wird; oder wobei das Steuersignal, das durch den Benutzer eingegeben wird, durch Detektieren einer Steueraktion des Benutzers, einschließlich Winken mit der Hand, einer Fingerbewegung, Kreisen des Fingers, Öffnen der Handfläche und Drehen des Handgelenks, Ansehen oder einer Ablenkung der Sichtlinie, einer Kopfbewegung oder einer Körperbewegung, ausgelöst und erzeugt wird; oder wobei das Steuersignal, das durch den Benutzer eingegeben wird, eine Spracheingabe ist;

Bestimmen (S102) einer Art und Weise eines Anzeigens von Videoinhalten gemäß dem Steuersignal, das durch den Benutzer eingegeben wurde, wobei die Art und Weise des Anzeigens von Videoinhalten einen Blickwinkel zum Abspielen erster Videoinhalte über das erste Objekt, eine Drehrichtung des ersten Objekts in den ersten Videoinhalten und Überspringen der ersten Videoinhalte, um mit einem Anzeigen zweiter Videoinhalte über das zweite Objekt fortzufahren, umfasst;

Bestimmen (S103) einer Videowiedergabe-Steueranweisung gemäß charakteristischen Informationen der Videoinhalte und der Art und Weise des Anzeigens der Videoinhalte, wobei die Videowiedergabe-Steueranweisung einen Wiedergabestart-Frame und eine Wiedergabesequenz von abzuspielenden Frames umfasst und wobei die charakteristischen Informationen der Videoinhalte eine Richtung, in der das erste Objekt in den ersten Videoinhalten gefilmt wird, eine Drehcharakteristik des ersten Objekts in den ersten Videoinhalten und Informationen, dass die ersten Videoinhalte über das erste Objekt sind und die zweiten Videoinhalte über das zweite Objekt sind, umfassen;

wobei die Drehcharakteristik des Objekts durch Aufzeichnen zusätzlicher Drehrichtungsinformationen bestimmt wird, die einer Richtung entsprechen, in der ein fotografierendes Gerät, das mit einem Sensor in einem Bewegungszustand ausgestattet ist, einschließlich eines Drei-Achsen-Gyroskops, das Objekt während eines Videoaufnahmeprozesses fotografiert; und

Abspielen (S104) der Videoinhalte unter Steuerung der Videowiedergabe-Steueranweisung;

wobei der Schritt des Bestimmens einer Art und Weise des Anzeigens von Videoinhalten gemäß dem Steuersignal, das durch den Benutzer eingegeben wurde, Folgendes umfasst: Vergleichen einer Drehrichtungsanforderung an das Objekt in dem Bild des Videos, die durch die Eingabe des Benutzers angegeben wird, und der Drehcharakteristik des Objekts in dem Bild des Videos und Abspielen des Videos in einer Vorwärtsrichtung, wenn die Drehrichtungsanforderung, die durch die Eingabe des Benutzers angegeben wird, und die Drehcharakteristik des Objekts die gleichen sind, oder Abspielen des Videos in einer Rückwärtsrichtung, wenn die Drehrichtungsanforderung, die durch die Eingabe des Benutzers angegeben wird, und die Drehcharakteristik des Objekts umgekehrt sind.

2. Verfahren nach Anspruch 1, ferner umfassend:

Erlangen einer Videoquelle, wobei die Videoquelle die Videoinhalte umfasst; und vor dem Erlangen eines Steuersignals, das durch einen Benutzer eingegeben wird, Anzeigen eines Vorschaubilds des Videos oder Abspielen der Videoinhalte.

3. Verfahren nach Anspruch 1, wobei das Erlangen eines Steuersignals, das durch einen Benutzer eingegeben wird, Folgendes umfasst:

Empfangen einer Sprachanweisung des Benutzers und Parsen der Sprachanweisung, um das Steuersignal zu erlangen; Detektieren einer Aktion des Benutzers und Parsen der Steueraktion, um das Steuersignal zu erlangen; Detektieren einer Fokuspunktänderung oder einer Fokusrichtungsänderung einer Sichtlinie des Benutzers, um das Steuersignal zu erlangen; oder Erlangen des Steuersignals durch Detektieren eines Vorgangs, der durch den Benutzer an einer Eingabevorrichtung durchgeführt wird.

4. Verfahren nach Anspruch 3, wobei das Steuersignal gemäß einer Aktionsgeschwindigkeit der Aktion oder einer Aktionsgeschwindigkeit des Vorgangs, der durch den Benutzer an der Eingabevorrichtung durchgeführt wird, eingestellt wird; und die Art und Weise des Anzeigens der Videoinhalte ferner Folgendes umfasst: Abspielen des Videos mit einer beschleunigten Geschwindigkeit, mit einer verlangsamten Geschwindigkeit oder mit einer normalen Geschwindigkeit, Abspielen des Videos, nachdem an eine bestimmte Stelle oder an einen bestimmten Zeitpunkt gesprungen wurde, oder Abspielen des Videos ab einer bestimmten Stelle oder einem bestimmten Zeitpunkt.

5. Verfahren nach Anspruch 1, 2 oder 3, wobei die Art und Weise des Anzeigens der Videoinhalte ferner Folgendes umfasst:

Vorwärtswiedergabe, Rückwärtswiedergabe, Wiederholungswiedergabe oder Anhalten der Wiedergabe; und das Bestimmen einer Art und Weise des Anzeigens von Videoinhalten gemäß dem Steuersignal, das durch den Benutzer eingegeben wurde, Folgendes umfasst:

Durchführen einer Vorwärtswiedergabe, Rückwärtswiedergabe, Wiederholungswiedergabe oder Anhalten der Wiedergabe der Videoinhalte gemäß dem Steuersignal, das durch den Benutzer eingegeben wurde.

6. Verfahren nach Anspruch 1, wobei das Bestimmen einer Art und Weise des Anzeigens von Videoinhalten gemäß dem Steuersignal, das durch den Benutzer eingegeben wurde, Folgendes umfasst:

Bestimmen einer Zielbildanforderung und einer Bewegungsrichtungsanforderung einer Videoinhaltswiedergabe gemäß dem Steuersignal, das durch den Benutzer eingegeben wurde; und Bestimmen der Art und Weise des Anzeigens der Videoinhalte gemäß der Zielbildanforderung und der Bewegungsrichtungsanforderung der Videoinhaltswiedergabe.

7. Verfahren nach einem der Ansprüche 1 bis 6, wobei das Verfahren ferner Folgendes umfasst:

Parsen einer Videoquelle der ersten Videoinhalte, um eine Abtastrichtung der Videoerfassung zu erlangen, wobei die Abtastrichtung die Drehcharakteristik des ersten Objekts ist; oder Parsen der Videoquelle der ersten Videoinhalte, um eine Bewegungsspur eines identifizierten Punkts zu erlangen, und Erlangen der Drehcharakteristik des ersten Objekts gemäß der Bewegungsspur des identifizierten Punkts.

8. Verfahren nach Anspruch 7, wobei die Drehcharakteristik des ersten Objekts Folgendes umfasst: Drehen des ersten Objekts von links nach rechts, von rechts nach links, von oben nach unten oder von unten nach oben.

9. Endgerät zum Abspielen eines Videos mit allen Winkeln über mehrere Objekte, von denen jedes in dem Video aus einem 360-Winkel gefilmt wird, wobei die mehreren Objekte ein erstes Objekt und ein zweites Objekt umfassen, wobei das Endgerät Folgendes umfasst:

eine Empfängerschaltung (703), die dazu konfiguriert ist, ein Steuersignal, das durch einen Benutzer eingegeben wird, zu erlangen, wobei das Steuersignal eine Vorgangsabsicht des Benutzers widerspiegelt; wobei die Empfängerschaltung dazu konfiguriert ist, das Steuersignal, das durch den Benutzer eingegeben wird, durch Detektieren eines Vorgangs, der durch den Benutzer auf einem intelligenten Terminal durchgeführt wird, einschließlich Schieben auf einem Touchscreen, zu erlangen; oder das Steuersignal, das durch den Benutzer eingegeben wird, durch Detektieren einer Steueraktion des Benutzers, einschließlich Winken mit der Hand, einer Fingerbewegung, Kreisen des Fingers, Öffnen der Handfläche und Drehen des Handgelenks, Ansehen oder einer Ablenkung der Sichtlinie, einer Kopfbewegung oder einer Körperbewegung, zu erlangen; oder eine Spracheingabe zu erlangen;

einen Prozessor (705), der dazu konfiguriert ist, eine Art und Weise eines Anzeigens von Videoinhalten gemäß dem Steuersignal, das durch den Benutzer eingegeben wurde, zu bestimmen und eine Videowiedergabe-Steueranweisung gemäß charakteristischen Informationen der Videoinhalte und der Art und Weise des Anzeigens der Videoinhalte zu bestimmen, wobei die Art und Weise des Anzeigens von Videoinhalten einen Blickwinkel zum Abspielen erster Videoinhalte über das erste Objekt, eine Drehrichtung des ersten Objekts in den ersten Videoinhalten und Überspringen der ersten Videoinhalte, um mit einem Anzeigen zweiter Videoinhalte über das zweite Objekt fortzufahren, umfasst, wobei die Videowiedergabe-Steueranweisung einen Wiedergabestart-Frame und eine Wiedergabesequenz von abzuspielenden Frames umfasst und wobei die charakteristischen Informationen der Videoinhalte eine Richtung, in der das erste Objekt in den ersten Videoinhalten gefilmt wird, eine Drehcharakteristik des ersten Objekts in den ersten Videoinhalten und Informationen, dass die ersten Videoinhalte über das erste Objekt sind und die zweiten Videoinhalte über das zweite Objekt sind, umfassen;

wobei der Prozessor ferner dazu konfiguriert ist, die Drehcharakteristik des Objekts durch Aufzeichnen zusätzlicher Drehrichtungsinformationen zu bestimmen, die einer Richtung entsprechen, in der ein fotografierendes Gerät, das mit einem Sensor in einem Bewegungszustand ausgestattet ist, einschließlich eines Drei-Achsen-Gyroskops, das Objekt während eines Videoaufnahmeprozesses fotografiert; und

eine Anzeige (704), die dazu konfiguriert ist, die Videoinhalte unter Steuerung der Videowiedergabe-Steueranweisung abzuspielen;

wobei der Prozessor (705) ferner dazu konfiguriert ist, eine Drehrichtungsanforderung an das Objekt in dem Bild des Videos, die durch die Eingabe des Benutzers angegeben wird, und die Drehcharakteristik des Objekts in dem Bild des Videos zu vergleichen und das Video in einer Vorwärtsrichtung abzuspielen, wenn die Drehrichtungsanforderung, die durch die Eingabe des Benutzers angegeben wird, und die Drehcharakteristik des Objekts die gleichen sind, oder das Video in einer Rückwärtsrichtung abzuspielen, wenn die Drehrichtungsanforderung, die durch die Eingabe des Benutzers angegeben wird, und die Drehcharakteristik des Objekts umgekehrt sind.

10. Endgerät nach Anspruch 9, wobei

die Empfängerschaltung ferner dazu konfiguriert ist, eine Videoquelle zu erlangen, wobei die Videoquelle die Videoinhalte umfasst; und die Anzeige ferner zu Folgendem konfiguriert ist: bevor die Empfängerschaltung das Steuersignal, das durch den Benutzer eingegeben wird, erlangt, Anzeigen eines Vorschaubilds des Videos oder Abspielen der Videoinhalte.

11. Endgerät nach Anspruch 9, wobei die Empfängerschaltung speziell zu Folgendem konfiguriert ist:

Empfangen einer Sprachanweisung des Benutzers und Parsen der Sprachanweisung, um das Steuersignal zu erlangen;
Detektieren einer Aktion des Benutzers und Parsen der Steueraktion, um das Steuersignal zu erlangen;
Detektieren einer Fokuspunktänderung oder einer Fokusrichtungsänderung einer Sichtlinie des Benutzers, um das Steuersignal zu erlangen; oder
Erlangen des Steuersignals durch Detektieren eines Vorgangs, der durch den Benutzer an einer Eingabevorrichtung, die mit der Empfängerschaltung verbunden ist, durchgeführt wird.

12. Endgerät nach Anspruch 11, wobei die Empfängerschaltung ferner dazu konfiguriert ist, das Steuersignal gemäß einer Aktionsgeschwindigkeit der Aktion oder einer Aktionsgeschwindigkeit des Vorgangs, der durch den Benutzer an der Eingabevorrichtung durchgeführt wird, die mit der Empfängerschaltung verbunden ist, einzustellen; und
die Art und Weise des Anzeigens der Videoinhalte ferner Folgendes umfasst: Vorwärtswiedergabe, Rückwärtswiedergabe, Wiederholungswiedergabe oder Anhalten der Wiedergabe; oder Abspielen des Videos mit einer beschleunigten Geschwindigkeit, mit einer verlangsamten Geschwindigkeit oder mit einer normalen Geschwindigkeit, Abspielen des Videos, nachdem an eine bestimmte Stelle oder an einen bestimmten Zeitpunkt gesprungen wurde, oder Abspielen des Videos ab einer bestimmten Stelle oder einem bestimmten Zeitpunkt.

13. Endgerät nach Anspruch 9, wobei der Prozessor speziell zu Folgendem konfiguriert ist:

Bestimmen einer Zielbildanforderung und einer Bewegungsrichtungsanforderung einer Videoinhaltswiedergabe gemäß dem Steuersignal, das durch den Benutzer eingegeben wurde; und Bestimmen der Art und Weise des Anzeigens der Videoinhalte gemäß der Zielbildanforderung und der Bewegungsrichtungsanforderung der Videoinhaltswiedergabe.

## Revendications

1. Procédé de lecture d'une vidéo tous angles concernant plusieurs objets, chacun étant filmé à 360° dans la vidéo, dans lequel les plusieurs objets comprennent un premier objet et un second objet, dans lequel le procédé comprend :

   l'obtention (S101) d'un signal de commande entré par un utilisateur, dans lequel le signal de commande reflète une intention d'opération de l'utilisateur ; dans lequel le signal de commande entré par l'utilisateur est déclenché et généré par la détection d'une opération réalisée par l'utilisateur sur un terminal intelligent, comportant le glissement sur un écran tactile ; ou le signal de commande entré par l'utilisateur est déclenché et généré par la détection d'une action de commande de l'utilisateur, comportant un geste de la main, un mouvement du doigt, une rotation du doigt, une ouverture de la paume et une rotation du poignet, un regard ou une déviation de la ligne de visée, un mouvement de la tête ou un mouvement du corps ; ou le signal de commande entré par l'utilisateur est une entrée vocale ;
   la détermination (S102) d'un mode d'affichage de contenu vidéo selon le signal de commande entré par l'utilisateur, dans lequel le mode d'affichage de contenu vidéo comprend un angle visuel pour lire un premier contenu vidéo concernant le premier objet, une direction de rotation du premier objet dans le premier contenu vidéo, et le fait de sauter le premier contenu vidéo pour continuer à afficher un second contenu vidéo concernant le second objet ;
   la détermination (S103) d'une instruction de commande de lecture vidéo selon les informations caractéristiques du contenu vidéo et le mode d'affichage du contenu vidéo, dans lequel l'instruction de commande de lecture vidéo comprend une image de début de lecture et une séquence de lecture d'images à lire, et dans lequel les informations caractéristiques du contenu vidéo comprennent une direction dans laquelle le premier objet est filmé dans le premier contenu vidéo, une caractéristique de rotation du premier objet dans le premier contenu vidéo, et des informations selon lesquelles le premier contenu vidéo concerne le premier objet et le second contenu vidéo concerne le second objet ;
   dans lequel la caractéristique de rotation de l'objet est déterminée en enregistrant des informations de direction de rotation supplémentaires correspondant à une direction dans laquelle un dispositif de photographie équipé d'un capteur en état de mouvement comportant un gyroscope à trois axes photographie l'objet pendant un processus de prise de vidéo ; et
   la lecture (S104) du contenu vidéo sous la commande de l'instruction de commande de lecture ;
   dans lequel l'étape de détermination d'un mode d'affichage de contenu vidéo selon le signal de commande entré par l'utilisateur comprend : la comparaison d'une exigence de direction de rotation indiquée par l'entrée de l'utilisateur sur l'objet dans l'image de la vidéo et la caractéristique de rotation de l'objet dans l'image de la vidéo, et la lecture de la vidéo dans une direction avant lorsque l'exigence de direction de rotation indiquée par l'entrée de l'utilisateur et la caractéristique de rotation de l'objet sont les mêmes, ou la lecture de la vidéo dans une direction arrière lorsque l'exigence de direction de rotation indiquée par l'entrée de l'utilisateur et la caractéristique de rotation de l'objet sont opposées.

2. Procédé selon la revendication 1, comprenant également :

   l'obtention d'une source vidéo, dans lequel la source vidéo comprend le contenu vidéo ; et avant l'obtention d'un signal de commande entré par un utilisateur, l'affichage d'une image d'aperçu de la vidéo ou la lecture du contenu vidéo.

3. Procédé selon la revendication 1, dans lequel l'obtention d'un signal de commande entré par un utilisateur comprend :

   la réception d'une instruction vocale de l'utilisateur et l'analyse de l'instruction vocale pour obtenir le signal de commande ;
   la détection d'une action de l'utilisateur et l'analyse de l'action de commande pour obtenir le signal de commande ;
   la détection d'un changement de point de focalisation ou d'un changement de direction de focalisation d'une ligne de visée de l'utilisateur pour obtenir le signal de commande ; ou
   l'obtention du signal de commande en détectant une opération réalisée par l'utilisateur sur un appareil d'entrée.

4. Procédé selon la revendication 3, dans lequel le signal de commande est ajusté selon une vitesse d'action de l'action ou une vitesse d'action de l'opération réalisée par l'utilisateur sur l'appareil d'entrée ; et

le mode d'affichage du contenu vidéo comprend également : la lecture de la vidéo à une vitesse accélérée, à une vitesse décélérée ou à une vitesse normale, la lecture de la vidéo après un saut vers un emplacement ou un moment particulier, ou la lecture de la vidéo à partir d'un emplacement ou d'un moment particulier.

5. Procédé selon la revendication 1, 2 ou 3, dans lequel le mode d'affichage de contenu vidéo comprend également : la lecture avant, la lecture arrière, la lecture en boucle ou l'arrêt de la lecture ; et

la détermination d'un mode d'affichage de contenu vidéo selon le signal de commande entré par l'utilisateur comprend :

la réalisation d'une lecture avant, d'une lecture arrière, d'une lecture en boucle ou d'un arrêt de la lecture du contenu vidéo selon le signal de commande entré par l'utilisateur.

6. Procédé selon la revendication 1, dans lequel la détermination d'un mode d'affichage de contenu vidéo selon le signal de commande entré par l'utilisateur comprend :

la détermination d'une exigence d'image cible et d'une exigence de direction de mouvement de lecture de contenu vidéo selon le signal de commande entré par l'utilisateur ; et

la détermination du mode d'affichage du contenu vidéo selon l'exigence d'image cible et l'exigence de direction de mouvement de la lecture de contenu vidéo.

7. Procédé selon l'une quelconque des revendications 1 à 6, dans lequel le procédé comprend également :

l'analyse d'une source vidéo du premier contenu vidéo pour obtenir une direction de balayage de capture vidéo, dans lequel la direction de balayage est la caractéristique de rotation du premier objet ; ou

l'analyse de la source vidéo du premier contenu vidéo pour obtenir une piste de mouvement d'un point identifié, et l'obtention de la caractéristique de rotation du premier objet selon la piste de mouvement du point identifié.

8. Procédé selon la revendication 7, dans lequel la caractéristique de rotation du premier objet comprend :

la rotation du premier objet de gauche à droite, de droite à gauche, de haut en bas ou de bas en haut.

9. Procédé terminal pour lire une vidéo tous angles concernant plusieurs objets, chacun étant filmé à 360° dans la vidéo, dans lequel les plusieurs objets comprennent un premier objet et un second objet, dans lequel le dispositif terminal comprend :

un circuit récepteur (703), configuré pour obtenir un signal de commande entré par un utilisateur, dans lequel le signal de commande reflète une intention d'opération de l'utilisateur ;

dans lequel le circuit récepteur est configuré pour obtenir le signal de commande entré par l'utilisateur en détectant une opération réalisée par l'utilisateur sur un terminal intelligent, comportant le glissement sur un écran tactile ; ou pour obtenir le signal de commande entré par l'utilisateur en détectant une action de commande de l'utilisateur, comportant un geste de la main, un mouvement du doigt, une rotation du doigt, une ouverture de la paume et une rotation du poignet, un regard ou une déviation de la ligne de visée, un mouvement de la tête ou un mouvement du corps ; ou pour obtenir une entrée vocale ;

un processeur (705), configuré pour déterminer un mode d'affichage de contenu vidéo selon le signal de commande entré par l'utilisateur, et déterminer une instruction de commande de lecture vidéo selon les informations caractéristiques du contenu vidéo et le mode d'affichage de contenu vidéo, dans lequel le mode d'affichage de contenu vidéo comprend un angle de vue pour lire un premier contenu vidéo concernant le premier objet, une direction de rotation du premier objet dans le premier contenu vidéo, et le fait de sauter le premier contenu vidéo pour continuer à afficher un second contenu vidéo concernant le second objet, dans lequel l'instruction de commande de lecture vidéo comprend une image de début de lecture et une séquence de lecture d'images à lire, et dans lequel les informations caractéristiques du contenu vidéo comprennent une direction dans laquelle le premier objet est filmé dans le premier contenu vidéo, une caractéristique de rotation du premier objet dans le premier contenu vidéo, et des informations selon lesquelles le premier contenu vidéo concerne le premier objet et le second contenu vidéo concerne le second objet ;

dans lequel le processeur est également configuré pour déterminer la caractéristique de rotation de l'objet en enregistrant des informations de direction de rotation supplémentaires correspondant à une direction dans laquelle un dispositif de photographie équipé d'un capteur en état de mouvement comportant un gyroscope à trois axes photographie l'objet pendant un processus de prise de vidéo ; et

un écran (704), configuré pour lire le contenu vidéo sous la commande de l'instruction de commande de lecture vidéo ;

dans lequel le processeur (705) est également configuré pour comparer une exigence de direction de rotation indiquée par l'entrée de l'utilisateur sur l'objet dans l'image de la vidéo et la caractéristique de rotation de l'objet dans l'image de la vidéo, et la lecture de la vidéo dans une direction avant lorsque l'exigence de direction de rotation indiquée par l'entrée de l'utilisateur et la caractéristique de rotation de l'objet sont les mêmes, ou la lecture de la vidéo dans une direction arrière lorsque l'exigence de direction de rotation indiquée par l'entrée de l'utilisateur et la caractéristique de rotation de l'objet sont opposées.

10. Dispositif terminal selon la revendication 9, dans lequel le circuit récepteur est également configuré pour obtenir une source vidéo, dans lequel la source vidéo comprend le contenu vidéo ; et

l'écran est également configuré pour : avant que le circuit récepteur obtienne le signal de commande entré par l'utilisateur, afficher une image d'aperçu de la vidéo ou lire le contenu vidéo.

11. Dispositif terminal selon la revendication 9, dans lequel le circuit récepteur est spécifiquement configuré pour :

recevoir une instruction vocale de l'utilisateur et analyser l'instruction vocale pour obtenir le signal de commande ;

détecter une action de l'utilisateur et analyser l'action de commande pour obtenir le signal de commande ;

détecter un changement de point de focalisation ou un changement de direction de focalisation d'une ligne de visée de l'utilisateur pour obtenir le signal de commande ; ou

obtenir le signal de commande en détectant une opération réalisée par l'utilisateur sur un appareil d'entrée connecté au circuit récepteur.

12. Dispositif terminal selon la revendication 11, dans lequel le circuit récepteur est également configuré pour ajuster le signal de commande selon une vitesse d'action de l'action ou une vitesse d'action de l'opération réalisée par l'utilisateur sur l'appareil d'entrée connecté au circuit récepteur ; et

le mode d'affichage du contenu vidéo comprend également : la lecture avant, la lecture arrière, la lecture en boucle ou l'arrêt de la lecture ; ou la lecture de la vidéo à une vitesse accélérée, à une vitesse décélérée ou à une vitesse normale, la lecture de la vidéo après un saut vers un emplacement ou un moment particulier, ou la lecture de la vidéo à partir d'un emplacement ou d'un moment particulier.

13. Dispositif terminal selon la revendication 9, dans lequel le processeur est spécifiquement configuré pour :

déterminer une exigence d'image cible et une exigence de direction de mouvement de lecture de contenu vidéo selon le signal de commande entré par l'utilisateur ; et

déterminer le mode d'affichage du contenu vidéo selon l'exigence d'image cible et l'exigence de direction de mouvement de la lecture de contenu vidéo.

*S101*

Obtain a control signal input by a user, where the control signal reflects an operation intention of the user

*S102*

Determine a manner of displaying video content according to the control signal input by the user

*S103*

Determine a video playback control instruction according to characteristic information of the video content and the manner of displaying the video content, where the video playback control instruction includes a playback start location and a playback manner

*S104*

Play the video content under control of the video playback control instruction

FIG. 1

FIG. 2

FIG. 3

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140340404 A
- US 2010017747 A
- JP 012175694 A
- JP 2014199990 A

**Non-patent literature cited in the description**

- *Webrotate 360 Product Viewer-User Guide v3.5*